# EUROPEAN PATENT APPLICATION

(11) **EP 3 872 401 A1**
(43) Date of publication of application: **01.09.2021**
(21) Application number: 21158370.3
(22) Date of filing: 22.02.2021
(51) Int. Cl.: F21V 11/18, F21V 14/08, G02B 19/00, F21W 131/406

(54) **PROJECTOR OF A LIGHT BEAM**

(30) Priority: 25.02.2020 IT 202000003835
(71) Applicant: D.T.S. Illuminazione S.r.l., 47843 Misano Adriatico (Rimini) (IT)
(72) Inventor: LATTEO, Eliseo, 47832 SAN CLEMENTE (IT); TONINI, Davide, 47853 CORIANO (IT)
(74) Representative: Milli, Simone

(57) **Abstract**

Described is a projector (100) of a light beam comprising a frame (T) having a first end (T1) and a second end (T2) to define a longitudinal axis of extension (X1), a light source (1) configured to emit a light beam in a direction of emission (X2) in a direction of emission (V), a shaping unit (2) configured to shape the light beam emitted by the light source (1), an optical unit (3) comprising a fixed lens (31) and a movable lens (32) configured at least to collimate said light beam and wherein the shaping unit (2) is movable relative to said light source (1) at least in a translating direction along the longitudinal axis of extension (X1) of said frame (T).

[FIGURE 1]

## Description

This invention relates to a light beam projector, in particular a projector equipped with a shaping unit.

One of the uses of the light beam projector may be, for example, but without restricting the scope of the invention, the lighting of rooms dedicated to artistic events, such as theatre productions and concerts, or sports events, both outdoors and indoors.

Obviously, this projector may also be used for other types of use, without thereby limiting the scope of protection of the projector.

There are various types of projectors on the market designed for the above-mentioned uses, structured in such a way as to emit various types of light beams.

There are projectors which are able to emit directed light beams, light beams modulated in amplitude, intensity, colouring and combined with optical effects which are capable of varying the shape of the beam emitted.

In their more general form, these projectors comprise a containment and support frame (or shell), having a main extension along the axis of emission of the light beam and containing inside it at least the following components: a controlled source of a light beam (for example LED type sources) at a first end of the frame, and an optical unit for the controlled output of the light beam.

In a solution of particular relevance to this specification, in addition to the above-mentioned list of components, a shaping unit for the light beam may also be added, interposed between the controlled source of the light beam and the optical output unit in the direction of emission of the light beam.

In the solutions adopted to date, the shaping unit is usually associated in a stable fashion at a predetermined distance from the controlled source of the light beam.

The function of the shaping unit of the light beam is to deform the light beam at the output from the light source, interrupting at least partly the forward movement of part of the light beam, so as to have at the input to the optical output unit a light beam of the desired shape.

In other words, the shaping unit modifies the cross section of the light beam along a plane preferably transversal to the axis of emission of the light beam, that is to say, to the direction of the light beam from the controlled source to the optical output unit.

The optical output unit has functions of collimating, that is, centring, the light beam so as to guarantee optimum lighting efficiency downstream of the projector and thus better illumination than the area intended to be affected by the light beam.

Depending on the uses, for example of the type of beam to be used and the amplitude of the area to be covered, the optical unit may comprise (inside the frame) several lenses, designed, for example, to modify the amplitude of the light beam, as well as generating chromatic or shape effects of the light beam.

The purpose of the optical unit is to dynamically adjust the focal point of the lens, in such a way as to have at any time optimum and efficient lighting of the area in question.

In order to be acceptable in terms of quality, the adjustment of the focal point take into account the shape of the light beam, since a beam of light with a larger cross section requires a focal point which differs from a light beam with the smaller cross section.

Generally speaking, the adjustment of the focal point of the optical unit is carried out by moving a component of the optical output unit, preferably a focal lens.

The movement of the component must therefore also be performed depending on the configuration adopted by the shaping unit.

In order to guarantee a high lighting efficiency, this dependence between the shaping unit and the optical unit currently leads to an excessive complication of the optical output unit, especially when the optical output unit comprises several processing components of the light beam.

In fact, it is particularly onerous to identify the focal point of the best lens according to the configuration adopted by the shaping unit of the light beam.

A prior art example of a projector with a different shaping unit is illustrated in patent document EP 1.384.941, wherein a focusing lens is stably associated (at the centre) on the shaping unit to form a single unit. The shaping unit/lens is axially movable and interposed between the light source and the optical output unit (in turn movable axially).

However, this solution has several drawbacks due to the reduced capacity of the shaping unit/lens in a single body in the adjustment of the amplitude of the light beam, since the moving towards and away of the entire unit tends to reduce the possibility of the lens to operate a large range of the light beam. As a result of this it is necessary to have very long axial adjustment strokes of the unit in order to compensate for this limitation, but in order to do this the projector is very bulky and with excessive dimensions for the type of use to which it is aimed.

A different type of solution of a prior art projector is described in patent document WO2014031644. This projector is equipped with a source of a light beam, a pair of flag-shaped diffuser filters which can be superposed on each other, controlled by a motor with opposite side and specular rotation between the two filters; a second pair of diffuser filters which can be superposed on each other which are also controlled by a motor with opposite side and specular rotation between the two filters. The two pairs of filters are mounted on a support movable along the direction of the light beam. This projector does not have a shaping unit and has the filter units and the light beam output unit which are movable along the axis of the light beam. This structuring makes the projector designed for a different use than the projectors equipped with a shaping device. The aim of the invention is therefore to provide a light beam projector which is particularly advanced but with simplified adjustment of the focal point which is able to provide high lighting efficiency.

Another aim of the invention is to provide a projector of a compact, light and versatile light beam.

Said aims are fully achieved by the light beam projector according to the invention as characterised in the appended claims.

The features of the projector according to the invention will become more apparent from the following detailed description of a preferred, non-limiting embodiment of it, illustrated in a schematic manner by way of example in the accompanying drawings, in which:
- Figure 1 is a schematic view of the light beam projector according to the invention;
- Figure 2 is a perspective view of an embodiment of the light beam projector according to the invention;

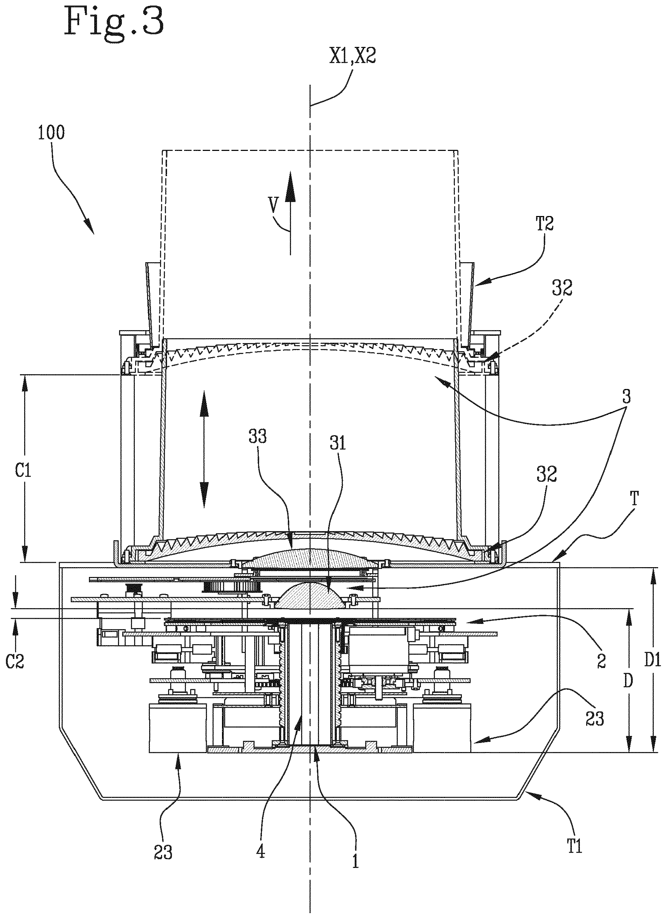

- Figure 3 is a side view in cross section of the light beam projector of Figure 2 with some parts cut away for greater clarity.

With reference to the accompanying drawings, the numeral 100 denotes a light beam projector.

In this description, the term "light beam projector" means a device, commonly known as a spotlight, designed for emitting a light beam with particular features thanks to a processing inside the light emitted by a light source.

Preferably, the projector 100 is used for lighting rooms dedicated to artistic events, such as theatre productions and concerts, or sports events, both outdoors and indoors.

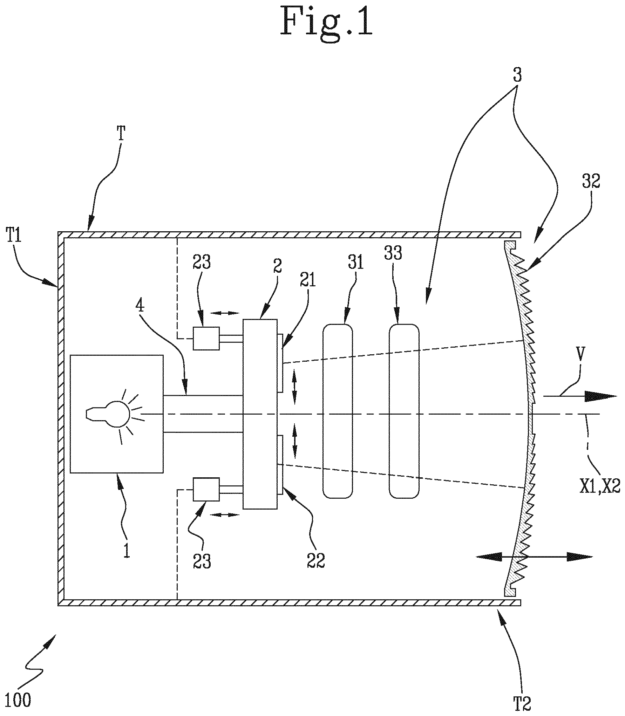

As illustrated in Figure 1, the projector 100 comprises a frame T, commonly also known as shell.

The frame T has a main longitudinal direction of extension between a first end T1 and a second end T2.

The direction joining said first and second ends T1, T2 defines a longitudinal axis of extension X1, that is to say, the direction along which the frame T has the main direction of extension.

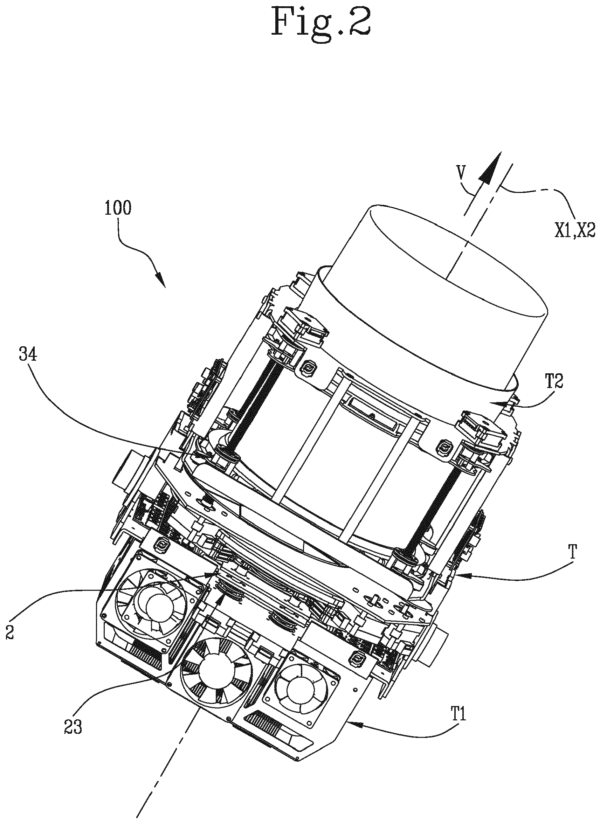

Preferably, the projector 100 has an extension along the longitudinal axis of extension X1 greater than the extension along the axes perpendicular to the longitudinal axis of extension, that is to say, it has an elongate shape as illustrated in Figure 2.

According to an embodiment, the frame T is made, at least partly, of metal material.

According to another embodiment, the frame T is made, at least partly, of plastic material.

The frame T mainly performs the functions for containing, protecting and supporting its components, which will be illustrated below.

Advantageously, the frame T may be associated with a movement unit, not illustrated, which is configured to rotate or translate or roto-translate the frame T, consequently directing the light beam emitted by the projector 100.

As illustrated in Figure 1, the projector 100 comprises a light source 1. Said light source 1 is fixed inside the frame T, close to the first end T1. More specifically, the light source 1 is connected to said frame T, in such a way that no relative movement is possible between the frame and the light source.

The light source 1 is configured to emit a light beam in a direction of emission X2, parallel to said longitudinal axis of extension X1 of the frame T.

More specifically, the light source 1 is configured to emit a light beam in the direction of emission X2 in a direction V of emission, which goes from the first end T1 to the second end T2.

Preferably, the direction of emission X2 coincides with the longitudinal axis of extension X1 of the frame T, as illustrated in the embodiment illustrated in the accompanying drawings.

In other words, the light beam is emitted by the light source 1 at the first end T1 and advances in the direction V along the direction of emission X2, through the frame along its longitudinal extension, until reaching the second end T2.

The light source 1 is, advantageously, connected to an electricity supply source, not illustrated.

Preferably, the source of electrical power supply is outside the frame T and the connection between the light source 1 and the electricity supply source is performed using suitable cables made of conductive material, preferably copper.

Again preferably, the projector 100 comprises electronic components configured at least to adapt the electricity supply entering the light source 1 in such a way as to minimise the risks of damage to the light source. According to an embodiment, the light source 1 is of the LED type. According to this embodiment, the light source 1 comprises a plurality of LEDs, preferably according to a multiple LED configuration of the COB (chip on board) type.

According to another embodiment, the light source 1 is of the discharge type.

According to yet another embodiment, the light source 1 is of the incandescent type.

Depending on the use, the projector 100 of the light beam emitted by the light source 1 has different chromatic properties, and the light source thus has different structural characteristics.

According to an embodiment, the light source 1 is of the monochromatic type, that is to say, it is configured to emit a light beam of a single predetermined colour.

In this embodiment, the light beam emitted by the light source 1 is preferably white.

According to another embodiment, the light source 1 is of the polychrome type, that is to say, configured for emitting a light beam of a colour selectable in a range of colours which can be emitted by the light source 1. As illustrated in the accompanying drawings, the projector 100 comprises a shaping unit 2, positioned inside the frame T along the longitudinal axis of extension X1.

More specifically, the shaping unit 2 is positioned downstream of the light source 1 in the direction V of emission of the light beam.

The shaping unit is associated in a movable fashion with the frame T; more specifically, it is movable at least in a translating direction along the longitudinal axis of extension X1 of the frame T.

In other words, the shaping unit 2 is movable at least in a translating direction along the longitudinal axis of extension X1 relative to said light source 1, which, being connected to the frame T, may be taken as a fixed point relative to which to refer the movements of the shaping unit 2, as well as other fixed and movable elements of the projector 100 which are described below.

In that sense, the projector 100 comprises at least one linear actuator 23 configured to control the translating motion of the shaping unit 2 along the longitudinal axis of extension X1.

Said linear actuator 23 is, advantageously, constrained to the frame T and, therefore, fixed relative to the light source 1.

The at least one actuator 23 is configured for modifying the distance between the shaping unit 2 and the light source 1.

Preferably, the linear actuator 23 is of the electromechanical type and is also operatively associated with the electricity supply source and with the electronic components of the projector 100 for its control.

Preferably, the projector 100 comprises at least two actuators 23 for modifying the distance between the shaping unit 2 and the light source 1. Alternatively, for a greater control of the movement of the shaping unit 2, the projector comprises four actuators 23 for modifying the distance between the shaping unit 2 and the light source 1.

According to an embodiment, the shaping unit 2 is associated in a movable fashion relative to the frame T also in a rotary direction about the longitudinal axis of extension X1.

For this purpose, the projector 100 comprises at least one rotational motor, not illustrated, to guarantee greater clarity in the drawings, designed to control the rotational motion of the shaping unit 2 about the longitudinal axis of extension X1.

In this embodiment, the shaping unit 2 is associated in a roto-translational fashion relative to the longitudinal axis of extension X1 of the frame T. The shaping unit 2 is configured for shaping the light beam emitted by said light source 1.

In this description, the expression "shaping of the light beam" means a deformation of the beam of light at the output from the light source 1, with the interruption at least partly of the forward movement of part of the light beam in the direction V along the direction of emission X2.

Thanks to the shaping operation it is possible to modify the shape of the beam of light emitted by the controlled light source.

Preferably, the shaping unit is configured for modifying the cross section of the light beam along a plane preferably transversal to the direction of emission X2.

According to one embodiment, the shaping unit 2 comprises at least one shaping element 21, 22.

Said at least one shaping element 21, 22 is movable along a plane transversal to the direction of emission X2 and is configured to interrupt at least partly the forward movement of the light beam in the direction V along the direction of emission X2.

Preferably, the shaping unit 2 comprises at least one electro-mechanical actuator, not illustrated, for moving the at least one shaping element 21, 22.

According to one embodiment, the shaping element 21, 22 has a flat shape, having the directions of greatest extension perpendicular to the direction of emission X2 of the light beam.

In one embodiment, the shaping unit 2 comprises at least two shaping elements 21, 22.

Preferably, the shaping unit 2 comprises four shaping elements. Preferably, each of said shaping elements 21, 22 is movable independently of the others, that is to say, it is controlled individually by a respective actuator.

According to the embodiment of Figure 1, the projector 100 comprises a guide element 4, positioned fixed inside the frame T and interposed between the light source 1 and the shaping unit 2.

Said guide element 4 is configured for guiding the light beam from the light source 1 to the shaping unit 2.

Preferably, the guide element 4 comprises a system of mirrors designed to direct the light beam emitted by the light source 1 towards the shaping unit 2.

The presence of the guide element 4 advantageously makes it possible to have, at the entrance to the shaping unit 2, the optical beam in optimum conditions for the respective shaping.

As illustrated schematically in Figure 1, the projector 100 comprises an optical unit 3 configured for focusing or collimation of the light beam emitted by the light source 1 and for varying the amplitude of the light beam.

Said optical unit 3 is positioned along the longitudinal axis of extension X1 inside the frame T and associated with the frame, which performs supporting functions.

According to the embodiment of Figure 1, the optical unit 3 is positioned, at least partly, close to the second end T2 of the frame T downstream of the shaping unit 2 in the direction V of emission of the light beam.

The optical unit 3 comprises a first and a second lens 31 and 32, that is to say, optical elements composed of transparent material capable of modifying the structural or chromatic properties of the light beam. Generally speaking, the lenses are made of glass or plastic material transparent to at least part of the visible spectrum, in such a way that the beam of light generated by the light source can pass through it.

In their generic definition, the lenses have two opposite surfaces which may be curved or flat.

Depending on the embodiment, the lenses 31, 32 may belong to one of the following classes of lenses: biconvex, biconcave, plano-convex, plano-concave, concave-convex or meniscus.

Advantageously, the use of multiple lenses of a different type makes it possible to combine the properties of the individual optics, so as to obtain a better lighting result with respect to that of a single lens.

The optical unit 3 comprises at least a first lens 31 fixed to the frame T configured for focusing or collimating the light beam and a second lens 32 movable along the frame T and configured to vary the amplitude of the light beam.

The first lens 31 of the optical unit 3 is fixed to the frame T at a distance D from the light source 1.

It should be noted that the shaping unit 2 is interposed between the light source 1 and the first fixed lens 31. The second movable lens 32 is a Fresnel type lens or a Fresnel lens, that is to say, an optical unit whose spherical lens is separated into two or more concentric annular sections, the so-called Fresnel rings, which are positioned substantially coplanar. The Fresnel lenses are used mainly in light beam collimation processes and have many advantages compared with traditional collimation optics. Advantageously, the use of a Fresnel lens allows a saving in terms of overall size, since the thickness of the lens is considerably reduced compared to a spherical lens with equivalent optical power.

Moreover, the use of a Fresnel lens makes it possible to make a lens which is large in size with a small focal length while limiting the weight of the lens itself.

The reduction in the overall size and weight of the optics is fundamental in the applications of projectors for lighting, such as the projector 100 according to the invention.

In the accompanying drawings, the lens 32 is a Fresnel lens and is located in the proximity of the second end T2 of the frame, that is to say, it is the output lens and is slidably movable along the frame T in order to modify the amplitude of the light beam.

In one embodiment, the second lens 32 is connected to the frame T and is slidable in both directions along the longitudinal axis of extension X1. Preferably, the second Fresnel lens 32 is movable at least in a translating direction along the longitudinal axis of extension X1 of the frame T, in the two direction for a stroke C1.

The translation of the at least one lens 32 allows a change of the amplitude of the light beam of the optical unit 3, so as to vary the illumination properties of the light beam emitted by the light source 1. Preferably, as illustrated in Figure 2, the projector 100 comprises at least one linear actuator 34 configured to control the translational motion of the second lens 32 along the longitudinal axis of extension X1.

Said linear actuator is, advantageously, constrained to the frame T and, therefore, fixed relative to the light source 1.

Preferably, the linear actuator is of the electromechanical type and is also operatively associated with the electricity supply source and with the electronic components of the projector 100 for its control.

In one embodiment, the translational motion of the second lens 32 and the translational motion of the shaping unit 2 coincide.

In other words, a relative movement between the shaping unit 2 and the at least one lens 32 is not possible because the two elements act like a single block.

Advantageously, in this embodiment there is no need for two linear actuators for separately controlling the translating motions of the at least one lens 32 and of the shaping unit 2 and it is possible to control these movements with a single linear actuator.

In another embodiment, the translational motion of the second lens 32 differs from the translational motion of the shaping unit 2.

In other words, a relative movement is possible between the shaping unit 2 and the second lens 32 since the two elements perform translational movements different from the light source 1, which represents a reference point in the projector 100.

The translational movement of the second lens 32 may be determined as a function of the translational movement of the shaping unit 2, that is to say, there is a relationship of dependence between the two translational movements.

Alternatively, the translational movement of the second lens 32 may be independent of the translational movement of the shaping unit 2, that is to say, there is no relationship of dependence between the two translational movements.

Advantageously, the possibility of moving separately the second lens 32 and the shaping unit 2 allows a greater versatility both in the focusing of the light beam emitted by the light source 1 and of the amplitude of the light beam.

Preferably, the optical unit 3 comprises a third lens 33 configured for focusing the light beam, positioned fixed on the frame T, downstream of the first lens 31 relative to the emitting direction V and at a predetermined distance D1 from the light source 1, which is greater than the distance D of the first lens 31.

This third fixed lens 33 is positioned downstream of the first lens 31 relative to the direction V of the light beam.

The diameter of the third lens 33 is larger than the diameter of the first lens 31. Further, the third lens 33 has optical properties (for example, the curvature of the lens) different from the first lens 31.

Inother words, the different dimensional and optical features between the first and third lenses 31 and 33 make it possible to optimise and increase the processing of the focusing of the light beam in extremely small spaces inside the frame T.

In practice, thanks to this structuring of the components of the projector it is possible to obtain a shaping of the light beam which is extremely wide, maintaining a reduced stroke C2 and, at the same time, being able to use a large stroke C1 of the second Fresnel lens so as to achieve a very wide range of adjustment of the amplitude of the light beam (with a ratio between the strokes C1 and C2 of at least 10:1) always maintaining an optimum focussing, irrespective of the positions adopted by the shaping unit 2 and by the second Fresnel lens 32.

All this makes it possible to compact the components in a projector of reduced size and limited costs, but with high quality in terms of precision and optimisation of the amplitude of the light beam.

The projector described above achieves the preset aims, that is to say, those of providing a light beam projector which is particularly advanced, but with simplified adjustment of the focal point which is able to provide a high lighting efficiency thanks to the possibility of adjusting at least the position of the shaping unit inside the frame.

Moreover, the projector according to the invention provides a compact, light and versatile projector, which is able to be used for various applications in the field of lighting events.

## Claims

1. A projector (100) of a light beam comprising:
- a frame (T) having a first end (T1) and a second end (T2) to define a longitudinal axis of extension (X1);
- a light source (1), positioned inside the frame (T) close to said first end (T1) and connected to said frame (T), connected to a source of electricity supply and configured for emitting a light beam in a direction of emission (X2) in a direction (V) which goes from the first end (T1) to the second end (T2);
- a unit (2) for shaping the light beam, positioned inside the frame (T) and associated in a movable fashion with said frame (T), positioned along the longitudinal axis of extension (X1) downstream of the light source (1) in said direction (V), said shaping unit (2) being configured for shaping the light beam emitted by said light source (1);
- an optical unit (3), positioned along the longitudinal axis of extension (X1) inside the frame (T) and associated with said frame (T), comprising at least a first lens (31) fixed to the frame (T) and configured for focusing or collimating the light beam and a second lens (32) movable along the frame (T) and configured to vary the amplitude of the light beam;
said projector (100) being **characterised in that** it comprises at least one linear actuator (23), connected to said frame (T), connected to the shaping unit (2) and configured for controlling a motion of the shaping unit (2) at least in a translating direction along the longitudinal axis of extension (X1) of said frame (T) in such a way as to at least modify the relative distance between the shaping unit (2) and the light source (1), and at least the first fixed lens (31) of the optical unit (31, 32).

2. The projector (100) according to the preceding claim, wherein the shaping unit (2) is associated in a movable fashion relative to the frame (T) also in a rotary direction about the longitudinal axis of extension (X1) of said frame (T).

3. The projector (100) according to any one of the preceding claims, wherein the shaping unit (2) comprises at least one shaping element (21, 22), movable along a plane transversal to the direction of emission (X2) and configured for interrupting at least partly the forward movement of the light beam in the direction (V).

4. The projector (100) according to any one of the preceding claims, comprising at least two linear actuators (23), connected to said frame (T) and configured for controlling the translation motion of the shaping unit (2) along the longitudinal axis of extension (X1).

5. The projector (100) according to any one of the preceding claims, wherein the first lens (31) of the optical unit (3) is fixed to the frame (T) at a distance (D) from the light source (1) and wherein the shaping unit (2) is interposed between the light source (1) and the first fixed lens (31).

6. The projector (100) according to any one of claims 1 to 4, wherein the optical unit (3) comprises the second lens (32) associated in a movable fashion with the frame (T), said at least one lens (32) being movable at least in a translating direction along the longitudinal axis of extension (X1) of the frame (T) at the second end (T2) of the frame (T).

7. The projector (100) according to the preceding claim, wherein the translating motion of said at least a second movable lens (32) and the translating motion of the shaping unit (2) have the same type of motion.

8. The projector (100) according to claim 6, wherein the translating motion of said at least one movable lens (32) is different to the translating motion of the shaping unit (2).

9. The projector (100) according to any one of the preceding claims, wherein the optical unit (2) comprises a third lens (33) configured for focusing the light beam, positioned fixed on the frame (T), downstream of the first lens (31) relative to the emitting direction (V) and at a predetermined distance (D1) from the light source (1); the third lens (33) having at least a diameter greater than the diameter of the first lens (31).

10. The projector (100) according to any one of the preceding claims, wherein at least the second movable lens (32) is a Fresnel type lens for varying the amplitude of the light beam.

11. The projector (100) according to any one of the preceding claims, comprising a guide element (4), positioned inside the frame (T), fixed to the frame (T), and interposed between the light source (1) and the shaping unit (2), configured for guiding the light beam from the light source (1) to the shaping unit (2).

12. The projector (100) according to any one of the preceding claims, wherein the light source (1) is a light source of the LED type.

13. The projector (100) according to any one of the preceding claims, wherein the direction of emission (X2) is parallel to said longitudinal axis of extension (X1) of the frame (T).
